# EUROPEAN PATENT APPLICATION

(11) **EP 1 253 535 A2**
(43) Date of publication of application: **30.10.2002**
(21) Application number: 02007654.3
(22) Date of filing: 04.04.2002
(51) Int. Cl.: G06F 17/60

(54) **Printing materials production supporting apparatus, printing materials production supporting system, printing materials production supporting programm, and printing materials production supporting method**

(30) Priority: 09.04.2001 US 828467
(71) Applicant: Fuji Photo Film Co., Ltd., Kanagawa 250-0123 (JP)
(72) Inventor: Honda, Hachirou, c/o Fuji Photo Film Co., Ltd., Kanagawa 258-8538 (JP); Ohtsu, Takatoshi, c/o Fuji Photo Film Co., Ltd., Kanagawa 258-8538 (JP); Fujitani, Naohiro, c/o Fuji Photo Film Co., Ltd., Tokyo 106-8620 (JP); Miyaki, Hiroshi, c/o Fuji Photo Film Co., Ltd., Tokyo 106-8620 (JP); Potts, Robert E., Jr., West Borough, MA 01581 (US); Reedman, Norman, Aurora Ontario, L4G6W4 (CA)
(74) Representative: Klunker . Schmitt-Nilson . Hirsch

(57) **Abstract**

It is an object of the present invention to provide a server site for supporting the course of producing one printing material typically with the cooperation of a plurality of parties of, for example, a publishing company, a printing company, a plate making company, a designer and the like. There are provided a designation reception section receiving a designation of a job representing one work consisting of a series of steps for producing one printing material, designation of a workflow representing procedures for executing the job and input of information on a client executing one job together with a predetermined customer, from a terminal of the predetermined customer among a plurality of terminals connected through a communication line; a security management section 147 managing information on the customer and the information on the client; a job management server 140 managing a progress status of the job received by the definition reception section for each job; a work space server 150 managing a substantial file storing data available as the printing material or data available as a part of the printing material relating to the job received by the definition reception section for each job; and an asset content server 160 managing the substantial file for each customer.

## Description

### BACKGROUND OF THE INVENTION

### Field of the Invention

The present invention relates to a printing material production supporting apparatus, a printing materials production supporting system and a printing materials production supporting method for supporting a process for producing one printing material typically with the cooperation of a plurality of parties of, for example, a publishing company, a printing company, a plate making company and a designer, and a printing materials production supporting program for allowing a computer or a computer network to operate as such a printing materials production supporting apparatus or printing materials production supporting system.

### Description of the Related Art

Conventionally, in process of completing one printing material, a printing company, for example, which received an order to produce a printing material from, for example, a publishing company does not carry out all the processes of completing the printing material. Instead, the printing company requests, for example, a designer to design the printing material and a plate making company to make a printing plate while the printing company is responsible only for printing. In this way, there are many cases where a plurality of parties (or companies) take their shares of the production of one printing material.

In such a case, it is necessary to transmit and receive images and text planned to be used for the printing material to and from the plural parties (or companies). Conventionally, they have been transmitted and received by mail or using delivery service by motorcycle. In recent years, it has become possible to transmit and receive files storing data on images and text through computer communication. File transfer of this type is spreading quite widely.

Further, even in one printing company, there are always many printing materials in process of production and it is necessary to manage their progress statuses on a one-by-one basis.

With such a background, it becomes a problem as to how to improve printing materials production efficiency using computers and communication which are increasingly developing.

For example, Japanese Patent Application Laid-Open No. 11-91189 discloses a system for receiving an order from an orderer through the Internet.

This system connects a party placing an order for a printing material to a party receiving the order through the Internet, to which extent, there are cases of making full use of communication and providing improved efficiency. However, this system is not intended to improve group work among the parties (or companies) taking their shares of the production of the printing material for the production of a printing material.

Also, Japanese Patent Application Laid-Open No. 11-91189 discloses a system for managing the progress status of printing material production. If adopting this system, it is possible to manage the progress status in a closed range, for example, inside one company and the like. It is, however, difficult to utilize the system as an open system bridging over a plurality of companies.

That is to say, if it is considered to produce one printing material with the cooperation of a plurality of parties (or companies), there sometimes occur two different groups, i.e., one group which proceeds with operation for work (which will be referred to as "job" herein) consisting of a series of steps to produce one printing material with the cooperation of group members and a group which is different from the former group and which proceeds with another job with the cooperation of group members. For example, a printing company A cooperates with a plate making company a to carry out operation for a certain job for which the printing company A received an order, while the printing company A cooperates with a plate making company b to carry out another job for which the same printing company A received an order. Also, one plate making company B receives an order to make a printing plate from one printing company a with respect to a certain job, while the plate making company B also receives an order to make a printing plate from another printing company b with respect to another job.

If it is intended to improve printing material production efficiency by utilizing a communication network, it is important to tackle how to transmit information to necessary parties (or companies) and prevent the information from leaking to unnecessary parties (or companies) to thereby protect security in the above-described case.

### SUMMARY OF THE INVENTION

It is an object of the present invention to provide a printing materials production supporting apparatus, a printing materials supporting system and a printing materials production supporting method capable of supporting the production of a printing material with the cooperation of a plurality of parties and improving printing material production efficiency while protecting security, and to provide a printing materials production supporting program for allowing a computer or a computer network to operate as such a printing materials production supporting apparatus or printing materials supporting system.

To obtain the above object, a printing materials production supporting apparatus according to the present invention is characterized by comprising:
a definition reception section receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line such as Internet;
a customer/client management section managing information on the customer and the information on the client;
a progress management section managing a progress status of the job received by the definition reception section for each job; and
a file management section managing a substantial file storing data available as the printing material or data available as a part of the printing material relating to the job received by the definition reception section for each job.

According to the printing materials production supporting apparatus of the present invention, since the customer managing one job designates clients cooperating with the customer to execute the job, it is possible to constitute different group work teams according to the respective jobs.

Further, since the progress status of the job is managed for each job and the substantial file is manage for each job, it is possible to limit the disclosure of information on each job to the team for executing the job with the cooperation of team members and to thereby ensure the protection of security. Besides, with this constitution, it is possible to grasp the progress status of each job, to aggregate information in this printing materials production supporting apparatus, to share the aggregated information relating to the job among the members of the team for executing the job with the cooperation of the members and to thereby improve printing materials production efficiency.

Here, it is preferable that the printing materials production supporting apparatus according to the present invention comprises an upload count section counting the number of times of upload of the substantial file by the customer and the client.

If the printing materials production supporting apparatus of the present invention is utilized as a business for charging money as consideration of the promotion of printing materials production efficiency, it is effective to use the number of times of the upload of the substantial file as a charging target. By comprising the above-described upload count section, the printing materials production supporting apparatus which is also effective for business is constituted.

Besides the number of times of upload, the number of times of the services for various types of services executed by this printing materials production supporting apparatus, such as the number of times of, for example, download and that of hard proof to be described later and the like, may be counted and reflected in a charging processing or the other processing.

Further, it is preferable that the printing materials production supporting apparatus according to the present invention comprises a preflight rule download section downloading rules necessary to execute a preflight processing for verifying whether the data to store in the substantial file is appropriate data for printing, to the customer and the client.

If the apparatus comprises this preflight rule download section, it is possible for the customer and the client to generate errorless data and to thereby further improve the printing materials production efficiency.

It is also preferable that in the printing materials production supporting apparatus according to the present invention, the definition reception section receives designation of privileges of the client by the customer, and the customer/client management section manages the information on the customer and the information on the client including information on the privileges of the customer; and the printing materials production supporting apparatus approves access from the client in a range of the privileges authorized to the client.

It is also preferable that the definition reception section receives designation of an operator operating the terminal and designation of privileges of the operator, and the customer/client management section manages information on the operator including information on the privileges of the operator as well as the information on the customer and the information on the client; and the printing materials production supporting apparatus approves access from the operator in a range of the privileges authorized to the operator.

By thus designating the privileges of the client and the operator, it is possible to further improve security and to prevent the occurrence of defects and the delay of the work due to inadvertent operations.

Furthermore, it is preferable that the printing materials production supporting apparatus according to the present invention comprises an asset management section managing the substantial file storing data available as the printing material or data available as a part of the printing material for each customer; and a first transfer section transferring the substantial file managed by the file management section to the asset management section in accordance with an instruction.

Also, it is preferable that the printing materials production supporting apparatus according to the present invention comprises an asset management section managing the substantial file storing the data available as the printing material or data available as a part of the printing material for each customer; and a second transfer section transferring the substantial file managed by the asset management section to the file management section in accordance with an instruction with the job being designated.

By managing and reusing the substantial file created in the past as assets (or materials), it is possible to further improve the printing materials production efficiency.

Moreover, since the asset management section is managed for each customer, the protection of security is ensured.

In addition, to obtain the above object, a printing materials production supporting system according to the present invention is characterized by comprising:
a definition reception section receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line such as Internet;
a customer/client management section managing information on the customer and the information on the client;
a progress management section managing a progress status of the job received by the definition reception section for each job; and
a file management section managing a substantial file storing data available as the printing material or data available as a part of the printing material relating to the job received by the definition reception section for each job.

The present invention is not necessarily integrated into one apparatus as the printing materials production supporting apparatus and may be constituted out of a printing materials production supporting system distributed on the network.

It is noted that the printing materials production supporting system of the present invention includes all the aspects of the above-described printing materials production supporting apparatus except that this system is a distributed system while the printing materials production supporting apparatus is constituted out of one apparatus.

Moreover, a printing materials production supporting program according to the present invention is a printing materials production supporting program executed in a computer and thereby allowing the computer to operate as a printing materials production supporting apparatus for supporting production of printing materials, and characterized by comprising:
a definition reception section receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line;
a customer/client management section managing information on the customer and the information on the client;
a progress management section managing a progress status of the job received by the definition reception section for each job; and
a file management section managing a substantial file storing data available as the printing material or data available as a part of the printing material relating to the job received by the definition reception section for each job.

The printing materials production supporting program of the present invention allows the computer to operate as the printing materials production supporting apparatus and includes aspects all of which correspond to the respective aspects of the printing materials production supporting apparatus of the present invention.

Alternatively, a printing materials production supporting program according to the present invention may be executed in a computer network and thereby allow the computer network to operate as a printing materials production supporting system for supporting production of printing materials. In that case, the printing materials production supporting program according to the present invention is characterized by comprising:
a definition reception section receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line such as Internet;
a customer/client management section managing information on the customer and the information on the client;
a progress management section managing a progress status of the job received by the definition reception section for each job; and
a file management section managing a substantial file storing data available as the printing material or data available as a part of the printing material relating to the job received by the definition reception section for each job.

Moreover, to obtain the above object, a printing materials production supporting method according to the present invention is characterized by comprising the steps of:
receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line;
managing information on the customer and the information on the client;
managing a progress status of the job received in the step of receiving the definition for each job; and
managing a substantial file storing data available as the printing material or data available as a part of the printing material relating to the job received in the step of receiving the definitions for each job.

The printing materials production supporting method of the present invention includes all the aspects corresponding to the respective aspects of the printing materials production supporting apparatus and the printing materials production supporting system of the present invention.

According to the present invention constituted as stated above, it is possible to support group work for the production of a printing material and to improve printing material production efficiency while protecting security.

### BRIEF DESCRIPTION OF THE DRAWINGS

FIG. 1 is a block diagram showing the overall constitution of a system including one embodiment of the present invention;
FIG. 2 is a functional block diagram constituting a server site shown in FIG. 1;
FIG. 3 is a schematic view showing one embodiment of a printing materials production supporting program according to the present invention;
FIG. 4 is a block diagram showing the overall constitution of a system including a server site as one embodiment of the present invention;
FIG. 5 is an explanatory view for a job management server (A), a work space server (B) and an asset content server (C) constituting the server site shown in FIG. 4;
FIG. 6 is a workflow chart at the time of starting group work;
FIG. 7 is a workflow chart of a pre-press processing;
FIG. 8 is a workflow chart relating to the storage and reuse of assets (materials);
FIG. 9 is a workflow chart for defining a customer and a client;
FIG. 10 shows a login screen;
FIG. 11 shows a job content definition screen;
FIG. 12 shows a job content definition screen;
FIG. 13 shows a job content definition screen;
FIG. 14 shows a workflow definition screen;
FIG. 15 shows a workflow definition screen;
FIG. 16 shows a workflow definition screen;
FIG. 17 shows a screen displayed when conducting a job search;
FIG. 18 shows a screen displayed when "Work Space" radio button is selected;
FIG. 19 shows a screen for designating a file locally existing on a client's terminal;
FIG. 20 shows a job status display screen;
FIG. 21 shows a screen for transferring a file from a work space to an asset content;
FIG. 22 shows an asset search screen;
FIG. 23 shows an asset search screen;
FIG. 24 shows a client list screen;
FIG. 25 shows a client privilege definition screen;
FIG. 26 shows a screen displayed when "Customer" is selected; and
FIG. 27 shows a screen displayed when "View Count" is selected.

### DETAILED DESCRIPTION OF THE PREFERRED EMBODIMENTS

The embodiments of the present invention will be described hereinafter.

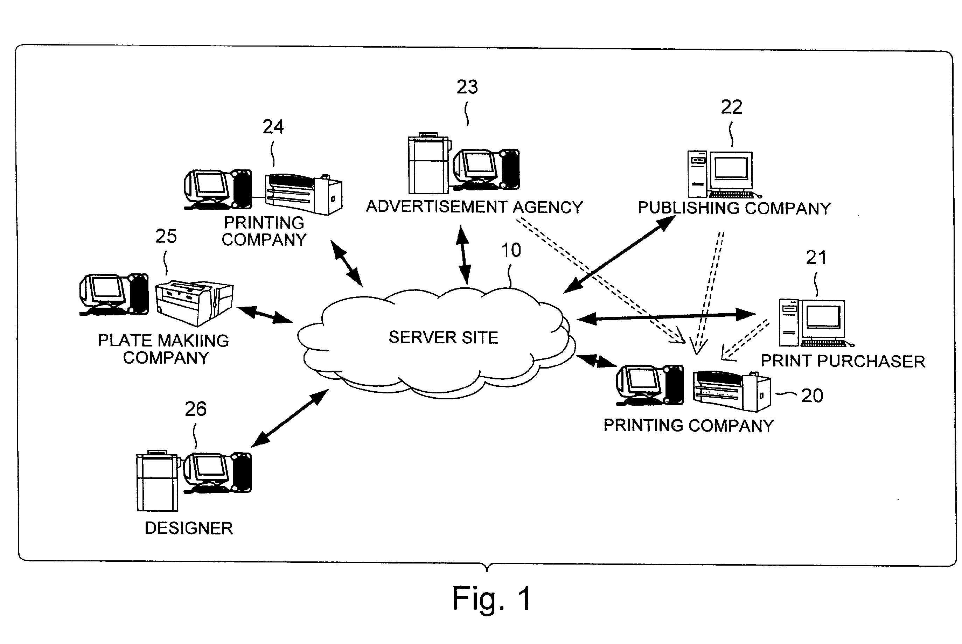

FIG. 1 is a block diagram showing an overall constitution of a system including one embodiment of the present invention.

A server site 10 indicated at the center of FIG. 1 corresponds to one embodiment of a printing materials production supporting apparatus of the present invention or one embodiment of a printing materials production supporting system of the present invention. The server site 10 is constituted by executing one embodiment of a printing materials production supporting program of the present invention on a single computer or a computer network consisting of a plurality of computers connected thorough communication lines.

In this example shown in FIG. 1, a printing company 20, a print purchaser 21, a publishing company 22, an advertising agency 23, another printing company 24, a plate making company 25 and a designer 26 are connected to the server site 10 through the Internet.

Here, it is assumed that the printing company 20 receives orders for print from, for example, the print purchaser 21, the publishing company 22, the advertisement agency 23 and the like. The server site 10 functions after, for example, the printing company 20 received an order for a certain printing material. The server site 10 is not responsible for a printing material order action and an order reception action.

It is assumed that the printing company 20 is already registered as a member by this server site 10. If receiving an order for a certain printing material from a certain orderer, the printing company 20 designates other companies and the like which cooperate with the production of one printing material ordered (which will be referred to as one "job"). Here, the parties (or companies) designated as such will be referred to as "clients" and the members of the server site 10 each having privileges to designate the clients will be referred to as "customers". In this case, the printing company 20 is a customer. The parties (or companies) other than the server site 10 and the printing company 20 may become clients if designated by the customer. The printing company 20 who is a customer can designate, as clients, the orderer of the job (such as the print purchaser 21, the publishing company 22 or the advertisement agency 23) and other companies and the like (such as another printing company 24, the plate making company 25 and the designer 26) which or who cooperate with the execution of the job. This client designation is conducted for each job. It is, therefore, possible to share information among job cooperative executors and impossible for parties other than the job cooperative executors to receive information on the job even if they are cooperative executers for another job, thus ensuring security.

The customer and clients of each job execute the job, while cooperating with one another. During the execution of the job, a file (which is a file storing data on sentences, images or the like constituting the printing material or becoming possible constituent elements for the printing material, which file will be referred to as "substantial file" herein) which stores data available as a printing material or a part of the printing material or a file which stores data on the progress statuses of respective steps while the job is being executed, is shared among the customer and clients of the job.

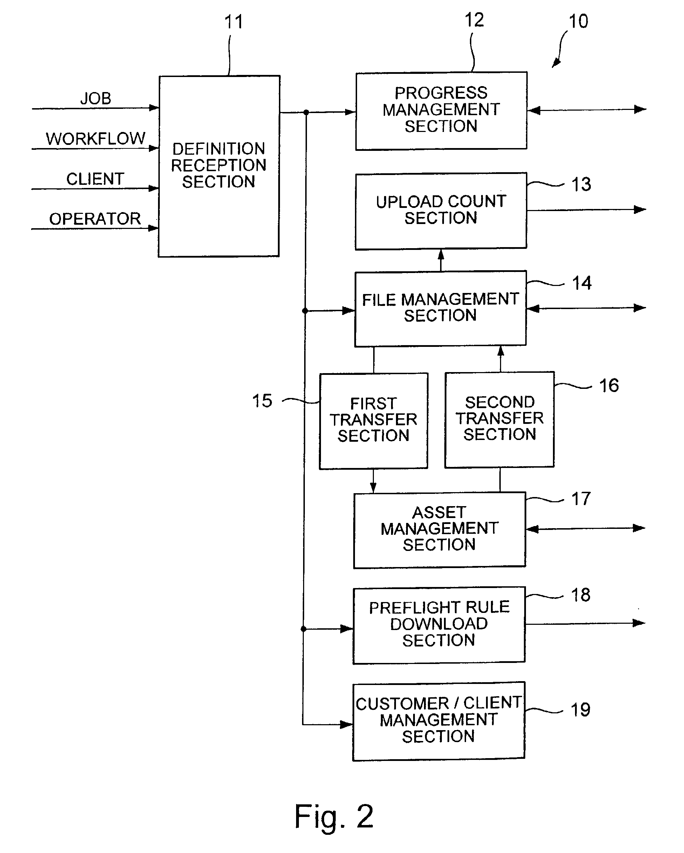

FIG. 2 is a functional block diagram showing the constitution of the server site 10 shown in FIG. 1.

The server site 10 may be one apparatus or may be constituted as a system consisting of a plurality of apparatuses connected through a network.

This server site 10 comprises a definition reception section 11, a progress management section 12, an upload count section 13, a file management section 14, the first transfer section 15, the second transfer section 16, an asset management section 17, a preflight rule download section 18 and a customer/client management section 19.

The definition reception section 11 is responsible for receiving the definition of a job as a work unit, the definition of a workflow representing procedures for carrying out the job, the designation of clients and the privileges of the clients and the designation of operators and the privileges of the operators made by a customer (for example, the printing company 20 in FIG. 2) which is one of members of the server site 10. Job definition information and workflow definition information received by the definition reception section 11 are inputted into and managed by the progress management section. Customer information, client information including information on the privilege of the clients and operator information including information on the privilege of the operators are inputted into and managed by the customer/client management section 19.

The server site 10 approves access from the clients and their respective operators only within the range of the respective privileges of the clients and operators received by the definition reception section 11. The following description will be given, while assuming that the respective clients and operators are not under the restrictions of their privileges but have all privileges necessary herein. If restrictions are placed on the privileges, the clients and operators can access the server site 10 only under the restricted privileges.

The progress management section 12 manages a progress status for each job. In response to access from the customer (who is actually the operator of the customer; note that the operator of the customer will be sometimes referred to simply as customer) and the client (who is actually the operator of the client; note that the operator of the client will be sometimes referred to simply as client, as well), the progress management section 12 updates the progress status and informs the customer and the client of the updated progress status. A progress status relating to a certain job can be informed to only the customer and the clients of the job.

The file management section 14 is responsible for the management of the substantial files with respect to the jobs definitions of which have been received by the definition reception section 11 according to the jobs. Here, the substantial files managed by this file management section 14 will be referred to as "job files".

The file management section 14 receives access from the customers and client of each job, adds, changes or deletes the job files, refers to the job files or the like.

The upload count section 13 monitors access from the customers and client and counts the number of times of the upload of the job file (or the transfer of the job file from the customer or clients to the server site 10). The number of times of upload can be referred to by the customer. The number of times of upload becomes a basic material for charging a service fee to the customers, as the member of this server site 10. Alternatively, not only the number of times of upload but also the numbers of times of other services such as the number of times of download or that of hard proof, may be counted to be used as a basic material for charging service fees to the customer.

Further, the asset management section 17 is responsible for the management of the substantial file which stores data available as the printing material or a part of the printing material for each customer separately from the job. Here, the substantial file managed by the asset management section 17 will be referred to as "asset file". Namely, a substantial file (or job file) relating to the job which is now being executed for the production of a printing material is managed by the file management section 14 for each job. A substantial file produced in process of executing various jobs is managed by the asset management section 17 so as to be reused later at need. The substantial file is sometimes directly uploaded from the customer or clients and stored in the asset management section 17. The substantial file selected from among the substantial files of the jobs for which, for example, all printing material production steps have been completed, is sometimes transferred from the first transfer section 15 which receives an instruction from the customer or the clients to the asset management section 17 and stored therein.

Conversely to the first transfer section, the second transfer section 16 transfers the substantial file from the asset management section 17 to the file management section 14 in response to an instruction from the customer or client. In this case, the asset management section 17 manages the substantial files for the respective customers and the file management section 14 manages the substantial files for the respective jobs. Due to this, if a substantial file is transferred from the asset management section 17 to the file management section 14, the job of the party to which the file is transferred is designated.

The preflight rule download section 18 downloads to the customer or client necessary rules for the execution of a preflight processing for verifying whether or not the data to store in the substantial file is appropriate data for printing. In this preflight processing, for example, whether or not a designated font is available to this system, whether or not the data is correctly linked to necessary image data, whether or not images are not those of R (red), G (green) and B (blue) but those of C (cyan), M (magenta), Y (yellow) and K(black) suited for printing 11 and the like are verified. In this preflight processing, a processing menu such as checking only the font can be selected.

The customer/client management section is responsible for the management of information on customers, clients and operators and information on the privileges of the customers, clients and the operators according to the respective customers, clients and operators, the authentication of the operators who access the system, checking the privileges thereof and the like.

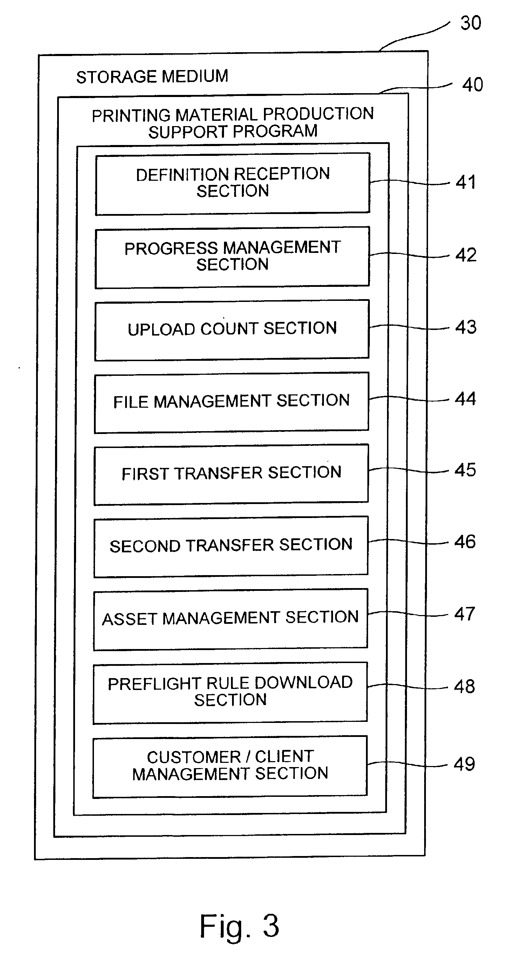

FIG. 3 is a schematic view showing one embodiment of a printing materials production supporting program according to the present invention.

A storage medium 30 shown in FIG. 3 is a storage medium provided in the server site 10 shown in FIG. 1. The storage medium 30 stores a printing material production supporting program 40. If the server site 10 consists of one computer, the storage medium 30 is a hard disk or the like constituting the computer. If the server site 10 consists of a plurality of computer networks, the storage medium 30 is a generic name of one or a plurality of storage mediums storing this printing materials production supporting program collectively or dividing the program among the mediums.

The printing material production support program 40 stored in the storage medium 30 shown in FIG. 3 includes program components, i.e., a definition reception section 41, a progress management section 42, an upload count section 43, a file management section 44, a first transfer section 45, a second transfer section 46, an asset management section 47, a preflight rule download section 48 and a customer/client management section 49. These program components 41 to 49 correspond to the respective constituent elements 11 to 19 of the server site 10 (which is the printing materials production supporting apparatus or the printing materials production supporting system) shown in FIG. 2. While each of the respective constituent elements 11 to 19 is a mixture of a hardware and a software, each of the program components constituting the printing materials production supporting program 40 shown in FIG. 3 only refers to an application program.

Since the functions of the respective program components constituting the printing materials production supporting program 40 shown in FIG. 3 are the same as those of the constituent elements denoted by the same names and constituting the server site 10 shown in FIG. 2, no repetitive description will be given.

Now, an embodiment will be described more specifically.

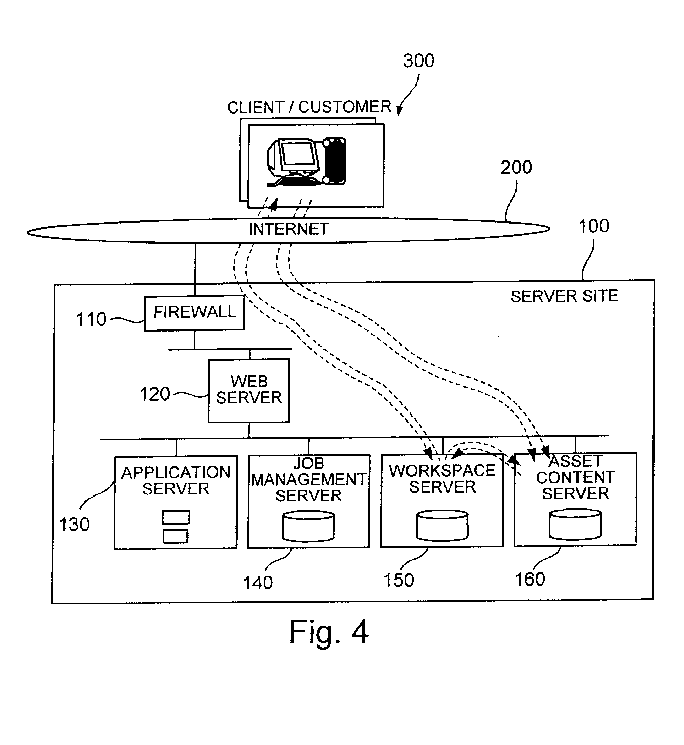

FIG. 4 is an overall block diagram including a server site as one embodiment of the present invention.

Many clients/customers 300 are connected to the server site 100 through the Internet 200. The definitions of the clients and the customer are the same as those in the above-described embodiment.

The server site 100 comprises a firewall 110 preventing illegal access, a web server 120 establishing communication with the clients/customers 300 through the Internet 200, an application server 130 executing various application programs, a job management server 140 managing jobs and the like registered in the server site 100, a work space server 150 storing job files (or substantial files storing data representing documents, images and the like corresponding to the respective jobs) defined as stated above, and an asset content server 160 storing asset files (or substantial files managed, separately from the specific jobs, according to the respective customers) defined as stated above.

The application server 130 receives the definitions of jobs, the definitions of workflows, the designation of clients, the designation of the privileges of the clients, the designation of operators and the designation of the privileges of the operators, from the customers through the firewall 110 and the web server 120. These definitions and designation are stored in and managed by the job management server 140. In the server site shown in FIG. 4, therefore, a combination of the application server 130, the job management server 140 and the like correspond to the definition reception section according to the present invention.

Also, if the application server 130 receives the designation of clients, the designation of the privileges of the clients, the designation of the operators, the designation of the privilege of the operators, then the information is stored in and managed by the security management section 147 (see FIG. 3) of the job management server 140. As to the customer, when the customer is registered as a customer, information relating to the customer is stored in and managed by the security management section 147. A combination of the application server 130 and the job management server 140, therefore, correspond to the customer/client management section according to the present invention.

Further, if receiving the definitions of the jobs and the like, the application server 130 creates and then manages files representing the progress statuses of the respective jobs in the job management server 140, updates the progress status files in response to access from the servers and the clients for updating the progress status files and referring to the files, and transmits the files to the customers and clients. A combination of the application server 130 and the job management server 140, therefore, correspond to the progress status management section according to the present invention.

Moreover, the application server 130 receives the upload of the substantial files from the customers and clients, stores the uploaded substantial files as job files corresponding to the respective jobs in the work space server 150, and downloads the job files to the customers or clients in accordance with their requests. A combination of the application server 130 and the work space server 150 in this server site 100, therefore, correspond to the file management section according to the present invention.

Furthermore, the application server 130 counts the number of times of the upload and download of files from the customers and clients and transmits data on the counting results to the customers in accordance with the requests of the customers.

Therefore, this application server 130 also corresponds to the upload count section according to the present invention.

Additionally, the application server 130 transfers the job files stored in the work space server 150 to the asset content server 160 to store therein the job files as the customers' asset files of the respective jobs in accordance with instructions from the customers and clients or transfers the asset files stored in the asset content server 160 to the work space server 150 to store therein the asset files as the job files in accordance with instructions from the customers and clients. If an asset file is transferred from the asset content server 160 to the work space server 150, the job is designated by the customer and/or clients and the asset file is transferred to the work space server 150 as a job file relating to the designated job.

Further, the application server 130 carries out processings for directly uploading the substantial files from the customers and the clients to the asset content server 160 and for directly downloading the asset files from the asset content server 160 to the customers and the clients in accordance with access from the customers and the clients without going through the work space server 150.

Therefore, a combination of the application server 130 and the asset content server 160 in this server site 100, therefore, correspond to the asset management section according to the present invention and the application server 130 also corresponds to the first and second transfer sections according to the present invention.

Although both the customers and the clients have access to the relevant servers for the above-described processings, only the customers are allowed to make the definitions of the jobs, the designation of the clients and the like. In addition, in which range the respective clients can access is determined by the designation of the privileges of the clients and the respective clients are allowed to have access only in the range of the privileges authorized thereto. The customers and the clients can designate operators who operate their terminals and the privileges of the operators. The respective operators are allowed to have access only in the range of the privileges authorized thereto. In addition, separately from the designation of the privileges, the respective customers and clients are allowed to have access only relating to the jobs for which the customers and clients are responsible for. However, the asset files stored in the asset content server 160 are managed according to the customers and the customers are allowed to access their own asset files.

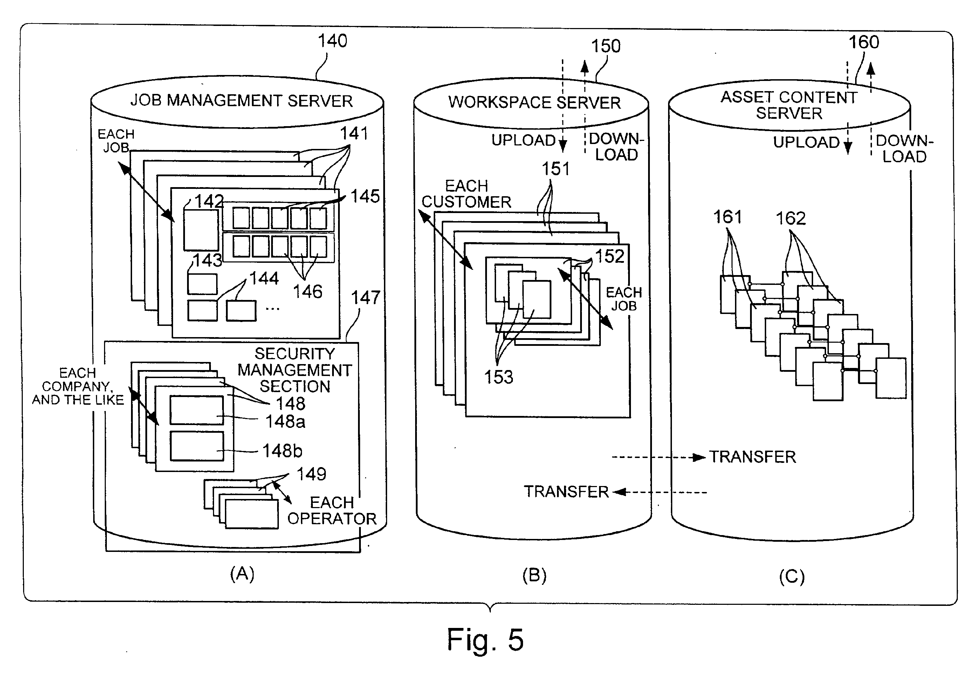

FIG. 5 is an explanatory view for the job management server (A), the work space server (B) and the asset content server (C) constituting the server site 100 shown in FIG. 4.

Job tables 141 are prepared in the job management server 140 according to the respective jobs. A job ID 142 consisting of a job No., a job name and the like for specifying a job, a customer ID 143 for specifying the customer of the job, a client ID 144 for specifying the client executing the job with the cooperation of the customer are recorded on each job table 141. Also, job tickets 145 and job statuses 146 are recorded on each job table 141. Steps for executing each job are divided into five steps; i.e., an e-production step, a prepress step, a press step, a finishing step and a shipping step as will be described later (it is noted, however, that the e-production step is carried out in the middle of the prepress step). A job ticket 145 is prepared for each step and a plan (for example, until when, what who does and who approves the completion of the step) for executing each step is recorded on the job ticket 145. This job ticket 145 is created as an initially set job ticket by customer's defining a workflow (see FIG. 2) and rewritten whenever the plan is changed thereafter.

Further, a job status 146 is provided to correspond to each job ticket 145 and in what status each step corresponding to the job ticket 145 is (for example, whether the step is completed, the step is being executed, the step is in a wait state or the like) is recorded on the job status 145. By referring to these job tickets 145 and the job statuses 146, the customers and clients can know how the job is shared and until when what they should do and also grasp the present progress status of the entire job.

Further, a security management section 147 is provided in this job management server 140. This security management section 147 stores information for managing the security of the entire system. That is to say, party tables 148 are prepared in the security management section 147 for the respective companies such as the customers and client. Information (such as the name and the address of a company) 148a on the profiles or the like of the company and privileges 148b authorized to the company are recorded on each party table 148. Each customer is a member of this system and registered when they becomes the member, while each client is registered when the customer first registers the client. Even a single company is registered as a client of a certain customer if the customer designates the company as a client and registered as a client of another customer if such another customer designates the company as a client. This is because even one company sometimes has different privileges according to different customers. Once the company is registered as a customer or a client, the registration remains valid even after the corresponding job is completed unless cancellation procedures are taken. Since it is complicated to reregister each job, each party table once registered is stored and referred to when the next job is registered. While it is described herein that the party tables 148 are prepared for the respective companies, one company is often registered a plurality of times as described above and not a company organization but a private firm such as a designer's firm and or the like is sometimes registered. For the convenience of description, description will be continued while assuming that the party tables are created for the respective companies.

Further, operator tables 148 are provided for the respective operators in the security management section 146. The operator registered in each operator table 148 belongs to any one of the companies registered on the party table 147. The operator actually operates a terminal relating to this system. Here, the operator is not necessarily a company's employee but may be an individual who is entrusted by the company, who is an employee of another company or who does not belong to any company. For the brevity of description, the operator is represented by the employee of the company registered on the party table 147.

Each operator table 148 is linked to any one of the party tables 147. An operator ID for specifying the operator, an operator specific password to verify access of the operator, privileges authorized to the operator and the like are recorded on each operator table 148.

In the work space server 150 shown in FIG. 5(B), a work space is secured for each customer. While it is described in this embodiment that a company is charged for uploading a file, the company is charged not only for uploading a file but also for securing the work space 151 in this work space server 150 and utilizing this system. If a company which becomes a customer is registered as a member of this system, a work space 151 is secured for the company.

Further, a job space 152 for each job is secured in the work space 151 which has been secured for each customer. A substantial file (or job file 153) storing data on each job which forms the basis for documents, images and the like is stored in each job space 152. In response to access from the customer and clients relating to the job, this job file is uploaded from the terminals of the customer or clients or downloaded to the terminals thereof.

Further, the substantial files created previously and managed for the respective customers are stored as asset files 161 in the asset content server 160 shown in FIG. 5(C). A keyword and comments added to each asset file and the date (year, month, day) when the asset file was stored in the server 160, a party (who may possibly be a customer or a client depending on the authentication of privileges) who stored the asset file in the server 160, a file size and the like are recorded on each asset file. By recording the keyword on asset information 162 added to each asset file 161, it is possible to simplify search. It does not necessarily mean that the number of keywords is limited to one per asset file but a plurality of keywords can be recorded on one asset file (or asset information).

In this asset content server 160, the files are directly uploaded from the customers and clients and directly downloaded to the customers and clients. In addition, the job file in the work space server 150 is transferred to the asset content server 160 and registered therein as an asset file, an asset file stored in the asset content server 160 is transferred to the work space server 150 after a corresponding job is designated and the asset file is registered in the work space server 150 as a job file.

Now, a concrete processing flow in this embodiment will be described.

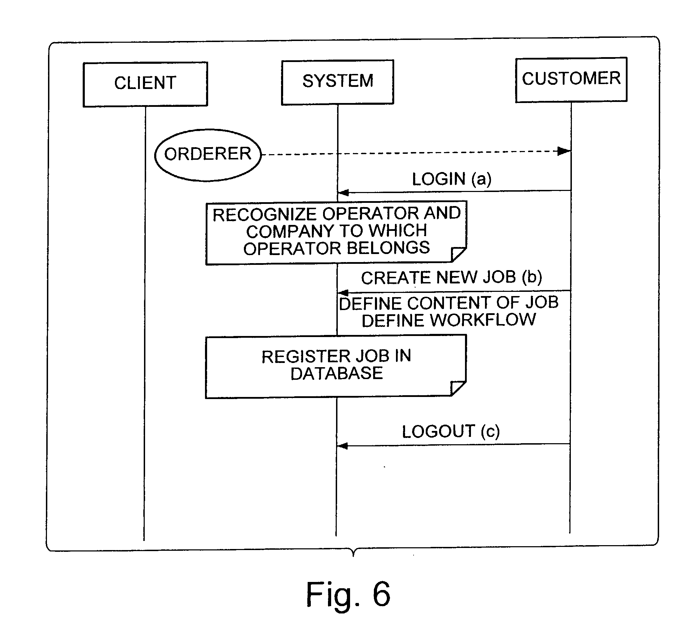

FIG. 6 is a workflow chart at the time of starting group work.

This system is intended for a processing to be conducted after an order is placed with a customer as a member of the system described herein. It is, therefore, assumed that the customer already received an order to produce a printing material from an orderer. In addition, it is assumed that the party table 148 was already registered in the security management section 147 (see FIG. 5) of the job management server 140 for each of the companies, as candidate clients, including the company which placed an order to produce the printing material and that the operator table 149 was registered for the operator of each company. The registration methods for the party table 148 and the operator tables 149 will be described later.

The customer who receives an order for the production of the printing material logs in this system (in a step a).

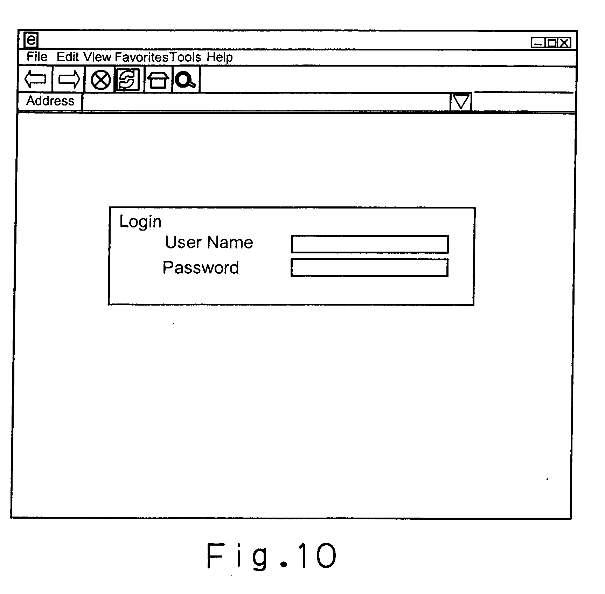

FIG. 10 shows a login screen.

The system is logged in by inputting an operator's name (User Name) and an operator's password (Password) as shown in FIG. 10.

The operator who can log in the system is registered on the operator table 148 shown in FIG. 5. If the operator is specified, the party table 147 relating to the company to which the operator belongs is specified, whereby the operator and the operator's company are specified. In this case, the specified company to which the operator belongs is a member of the system and a customer of a job to be registered this time.

When the system login is carried out, a new job is created (in a step b).

Here, the content of the job and a workflow are defined.

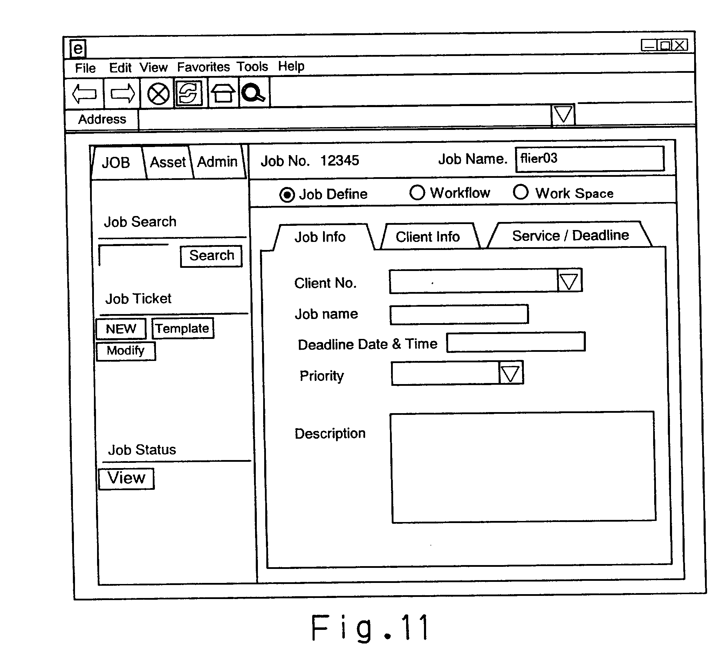

FIGs. 11 to 13 show job content definition screens.

Here, any one of "JOB", "Asset" and "Admin" appearing on the upper left of the screen is selected. In case of FIGs. 11 to 13, "JOB" is selected. By selecting this "JOB", the definition of the content of the job and that of the workflow can be conducted.

"Job Search" is used to search for an already registered job. If one concrete job is extracted, information on the extracted job is displayed in the right of the screen. If a plurality of jobs are extracted as a result of the search, a list of the extracted plural jobs is displayed. If one job is selected from the list, information on the selected job is displayed.

"Job Ticket" is selected from "New", "Template" and "Modify" . "New" is selected when a job is first inputted. When selecting "New", an input screen on which all input boxes are blank is displayed. "Template" is selected when a template (design) registered in advance is called and corrected and a new job is defined. If selecting "Template", a template list is first displayed. If selecting a specific template from the list, an input screen on which input boxes are filled with input information on the template is displayed. By correcting only the necessary items on the input screen of the template, a new job can be defined.

When selecting "Modify", specific job information is displayed by conducting "Job Search" before the selection of "Modify". If so, the screen on which the information on the job is displayed is changed to a modifiable input screen. By making necessary modification, a new job is defined.

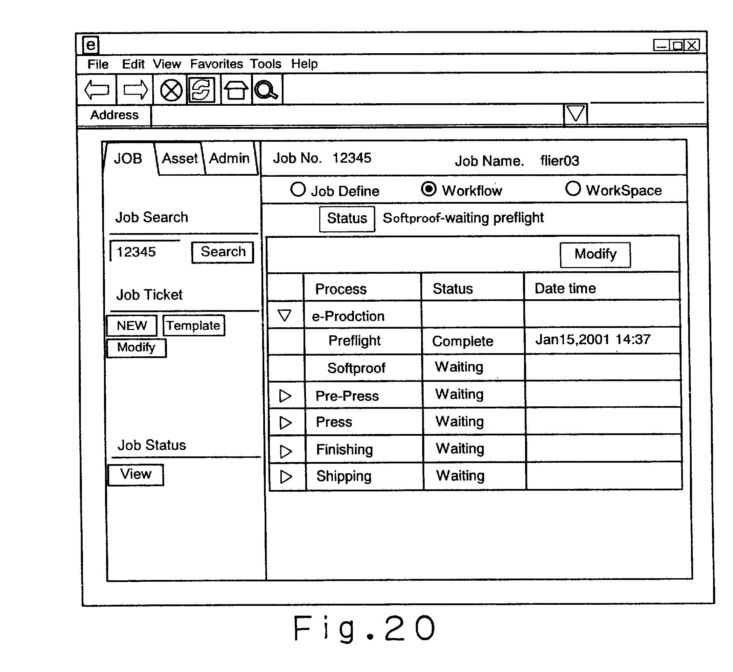

In case of "Job Status", if a job is specified and then "View" is selected, then a screen representing the progress statuses of the job is displayed as shown in, for example, FIG. 20. FIG. 20 will be describe later.

"Job No." represents the number of a specified job. If a new job is defined, the next number to the job number last defined is allotted.

"Job Name" is a display box for the name of a job.

"Job Define", "Workflow" and "Work Space" are radio buttons selected when a job is defined, when a workflow is defined and when a job space 152 in the work space server 150 (see FIG. 5) is referred to, respectively.

In FIGs. 11 to 13, "Job Define" is selected.

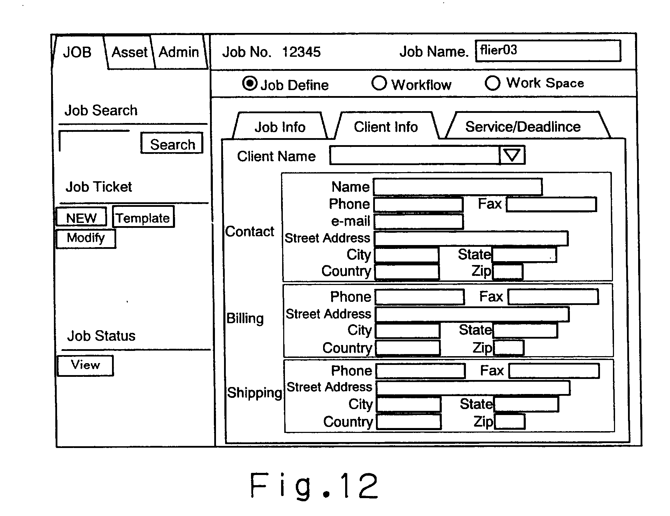

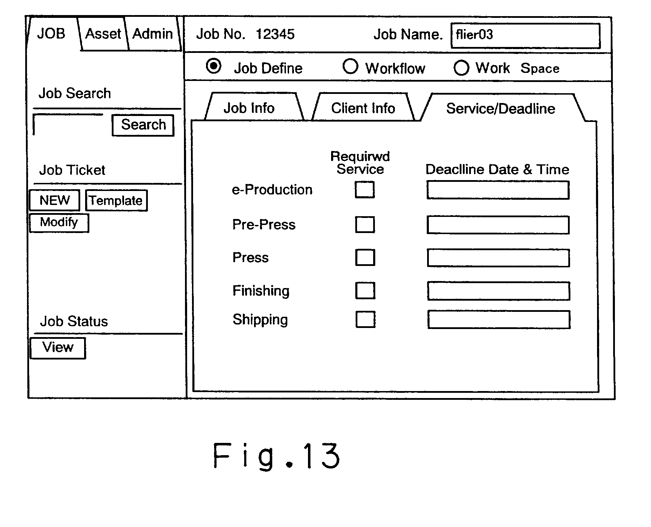

A job is defined by defining "Job Info" (FIG. 11), "Client Info" (FIG. 12) and "Service/Deadline" (FIG. 13).

"Job Info" is the definition of the job itself. In this case, "Client No.", "Job Name", "Deadline Date & Time" and "Priority" are defined as "Job Info" and, if necessary, comments and memorandum on the job are described in "Description" box.

"Client No." is a box to designate a client taking its shares of this job by designating the number of company designated as a client (which number is registered in the party table 148 shown in FIG. 5).

In FIG. 11, only one designation box for "Client No." is provided just to avoid complication. A plurality of clients can be actually designated.

"Job Name" is a box into which the name of this job is inputted. If the name of the job is inputted, the inputted name is also reflected in the display box ("Job Name") for the name of the job next to "Job No."

The data (year, month, day) by which the job is to be completed (the printing material is to be finished) and the printing material is shipped to the orderer and, if necessary, hours are inputted into "Deadline Date & Time" box.

"Priority" is a box to designate the priority of the job and one of urgent, normal and the like is selected.

Memorandum and comments are inputted into "Description" box if necessary.

On the "Client Info" definition screen shown in FIG. 12, not only "Client Name" but also "Contact", "Billing" and "Shipping" are defined.

"Client Name" is a box to select the name of a client. When opening this list box, a list of one or a plurality of clients which client numbers are designated in "Job Info" shown in FIG. 11 is displayed and one of the listed client is selected.

With respect to the client thus selected, a name, a telephone number, a FAX number, an email address, an address and the like for ordinary contact are inputted into "Contact" box, information as to the contact of a window relating to the transfer of money is inputted into "Billing" box and the destination of the goods (or printing material) is inputted into "Shipping" box. Unnecessary boxes may be left blank.

FIG. 13 is a screen of the definition of "Service/Deadline". On this screen, whether to receive the respective services of this system and the deadlines (planned step completion dates) of the steps for the services are inputted with respect to an "e-production" step, a "prepress" step, a "press" step, a "finishing" step and a "shipping" step.

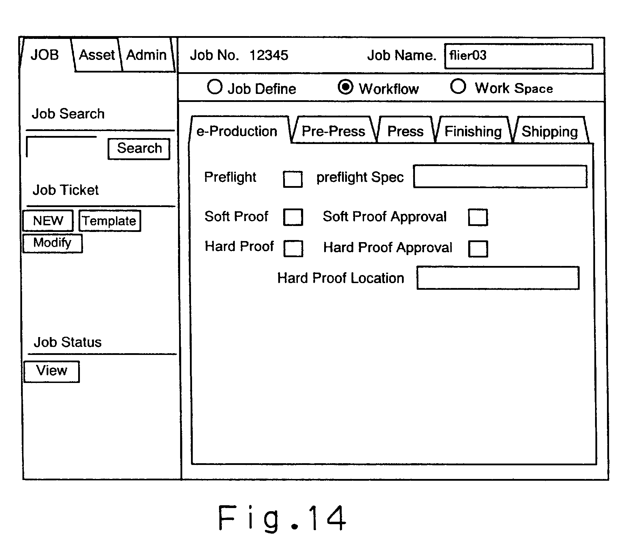

FIGs. 14 to 16 show workflow definition screens. On this screens, "Workflow" radio button is selected and five steps, i.e., the "e-production" step, the "prepress" step, the "press" step, the "finishing" step and the "shipping" step are defined.

FIG. 14 shows an "e-production" definition screen. On this screen, "preflight", "soft proof" and "hard proof" are defined.

"Preflight" is a processing for verifying whether or not the substantial file storing data which forms the basis of printing such as sentences and images is a file storing data suited for printing.

"Soft proof" is a processing for displaying the content of the substantial file which has been subjected to ordinary printing processings on the display screens on the terminals of the customers and clients. "Hard proof" is a processing for printing the content of the substantial file using a printer called proofer.

As for "preflight", on the "e-production" definition screen shown in FIG. 14, whether or not the service of this system is received is defined and the content of the preflight if receiving the service of this system is defined. A plurality of templates (design) are prepared for the content of the preflight including that for receiving the check of only font and for receiving the inspection of all the menus of the preflight and the like. By selecting a desired template from the plural template, the content of the preflight is defined.

As for "soft Proof", whether or not the service of this system is received and whether or not an approval action for defining the substantial file of the soft proof is conducted if the service of this system is received are defined.

As for "hard Proof", whether or not the service of this system is received, who approves the hard proof and to which proofer the hard proof is outputted are defined.

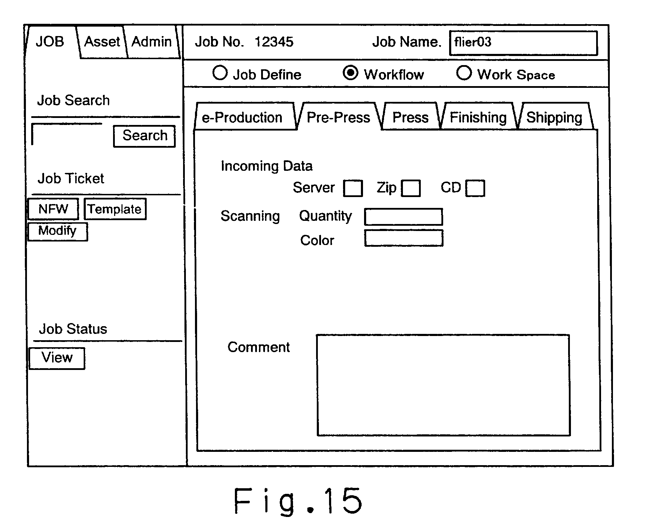

FIG. 15 shows a "prepress" definition screen.

On this screen, a data input method (input from the server, input from a storage medium called Zip or input from a storage medium called CD) is selected. In addition, the resolution and colors (RGB, CMYK or the like) of image data in case of reading and inputting images by a scanner are defined. Comments and memorandum are freely inputted into "Comment" box.

Although the "press" (printing) step and the "finishing" (bookbinding, processing and the like) step are defined in the same manners as those stated above, the illustration and description thereof will not be given herein.

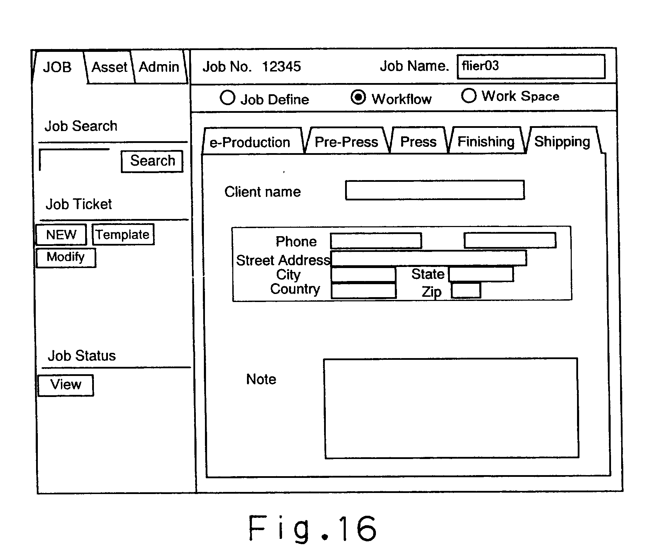

FIG. 16 shows a "shipping" (shipment) definition screen.

On this screen, the name, address and the like of the client which is shipment destination are defined. If the name of the client, the address of the shipment destination and the like are already defined (see FIG. 12), then it is unnecessary to define them again. If opening this screen, the screen is displayed while these pieces of information have been already inputted.

Comments and memorandum are freely inputted into "Note" box.

In a new job creation step (step b) shown in FIG. 6, the job and workflow are defined as stated above.

Based on these definitions, the defined job is registered in a database. To be specific, a job table 141 on the job is generated in the job management server 140 shown in FIG. 5 and necessary information is written to the job table 141, thereby securing the job space 152 relating to the job in the work space 151 of the customer in the work space server 150.

An operation for starting group work shown in FIG. 6 is completed by logout (in a step c).

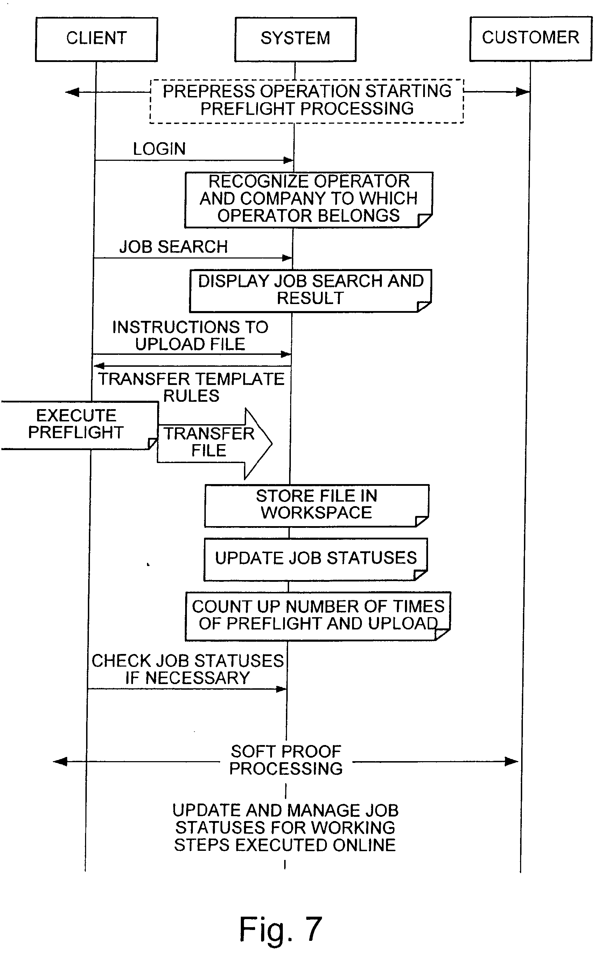

FIG. 7 is a work flow chart for a prepress processing.

The e-production step is executed in the middle of the prepress operation at need.

Here, it is assumed that a certain client logs in the system (in a step d). This login is carried out from a login screen shown in FIG. 10. The system recognizes the operator and the company to which the operator belongs (or client). The same screen as that shown in FIG. 11 is displayed on the client display screen.

On this screen, job search is carried out next.

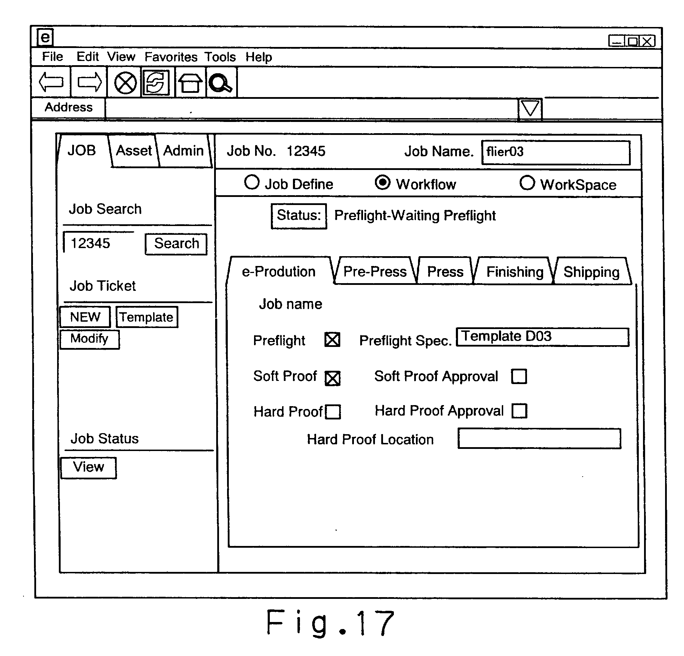

FIG. 17 shows a screen when a job is searched.

If specific job No. is inputted into "Job Search" box and "Search" is executed, the job is extracted. If "Workflow" radio button is selected, the workflow screen of the job is displayed as shown in FIG. 3. As already described above, if "Search" is executed without inputting any specific job No., a list of jobs dealt by the client is displayed and one concrete job is selected from the list.

On this screen shown in FIG. 17, it is indicated that "Preflight" is in a "Waiting Preflight" (not processed yet) status as "Status" (progress status), a preflight processing and a soft proof processing are selected as the e-production of this job, "Template 03" is employed for the preflight processing and an approval action is unnecessary for the soft proof processing.

Next, the client issues a file upload instruction (in a step f).

This file data is a substantial file created by the client and relating to the job which is now being executed. The file upload instruction is to instruct this substantial file to be transferred to the system.

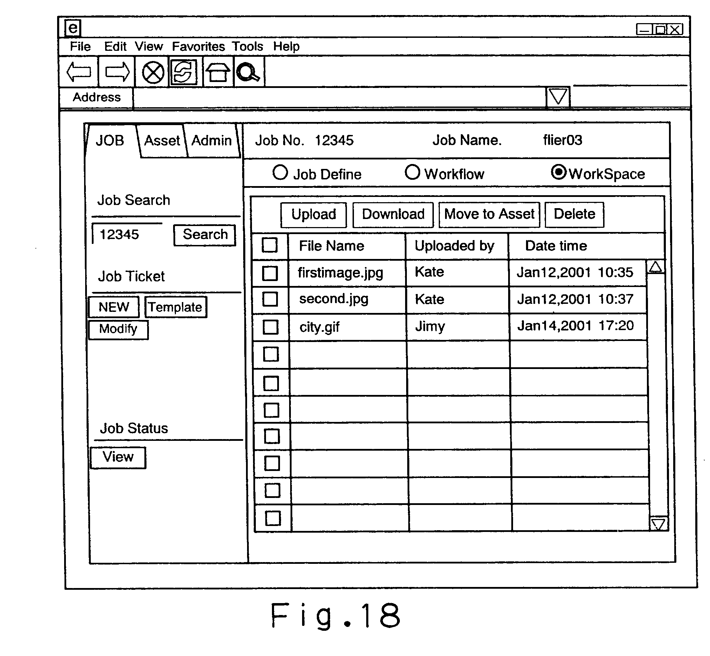

FIG. 18 shows a screen displayed when "Work Space" radio button is selected after extracting the job as described above with reference to FIG. 17.

On this screen, a list including the name of the uploaded substantial file (File Name), the name of the operator who uploaded the file (Uploaded by...) and the upload date (Date time) is displayed with respect to the job.

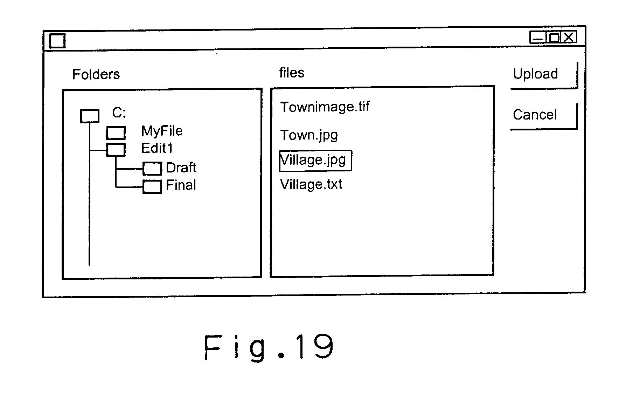

FIG. 19 shows a screen for designating a file present locally on the terminal of the client.

If "Upload" is selected on the screen shown in FIG. 18, the screen shown in FIG. 19 is displayed. On the screen of FIG. 19, a file to be uploaded is selected and "Upload" is selected. Then, after the preflight processing is conducted as will be described below, the selected file is uploaded to the system.

If the to-be-uploaded file is specified and the execution of upload is instructed as described above, then a file on which necessary rules for the execution of the preflight processing are described is transmitted to the client (in a step g). In the example shown herein, "Template D03" is selected as shown in FIG. 17 and preflight rules suited for the template are transmitted to the client.

The client executes the preflight processing using the transmitted preflight rules for the file to be uploaded. If it is judged in the preflight processing that the file is suited for this system, the file is transferred to the system.

The system stores the transferred file in the job space 152 relating to this job in the work space server 150 shown in FIG. 5 as a job file. The job status 146 is updated to indicate that the preflight processing of this file has been carried out and the number of times of preflight and upload is counted up.

Here, this preflight processing can be carried out by the customer.

In the latter case, if the client issues an instruction to upload a file (in a step f), the preflight processing is not carried out at that point and the to-be-uploaded file is stored in the system. The customer temporarily downloads the stored file, executes the preflight processing to the file and uploads and stores the result in the system. If the file is suited for the system, the system formally stores the file in the work space, counts up the number of times of preflight and upload and also notifies the client that the preflight processing has been carried out. On the other hand, if the system is notified by the customer that the file is not suited for the system, the system destroys the file and notifies the customer that the file has been destroyed. The client modifies the file in response to the notification.

Further, whenever necessary, the job status is checked (in a step h), whereby the progress statuses of the job can be known.

FIG. 20 shows a job status display screen. As already described with reference to FIG. 11, if "View" of "Job Status" which appears on the lower left of the screen is selected, the job status screen as shown in FIG. 20 as one example is displayed.

On this screen, with respect to "e-production", it is indicated that "Preflight" is completed (Complete), "SoftProof" is not carried out yet (Waiting) and "prepress", "press", "finishing" and "shopping" steps are not completed (Waiting).

Further, if it is defined to carry out a soft proof processing (see FIG. 17), the soft proof processing is carried out at need as shown in FIG. 7.

In this soft proof processing, a file to be subjected to the soft proof processing is downloaded to the customer and the clients carrying out this processing. The content of the file (documents and images to be used for printing) is displayed on the display screens of the customer and clients. While viewing the display screens, comments are inputted or a plurality of parties (customer and clients) carrying out the soft proof processing of the file discuss the file.

In addition, as for the job for which the execution of a hard proof processing is designated, the content of the file is printed out by a printer called proofer.

Further, for example, press (printing), finishing (plate making, processing and the like) and shipping (delivery) steps are executed offline separately from this system. This system is provided with a schedule by the job ticket 145 shown in FIG. 5 in these steps. If the completion of the respective steps are notified to the system, the progress statuses thereof are inputted into the job status 146 to allow the other participating parties to grasp the progress statuses (in a step h).

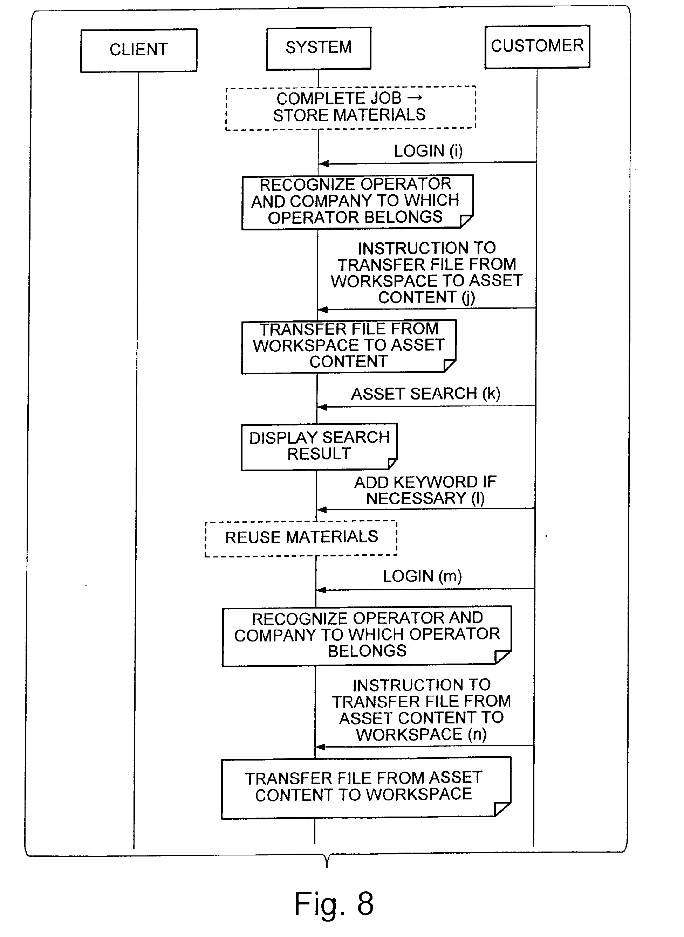

FIG. 8 is a workflow chart relating to the storage and reuse of assets (materials) . In this flow, various substantial files (materials) produced in process of the execution of the job are stored.

Here, if the customer inputs necessary information on the login screen shown in FIG. 10, login is conducted (in a step i). The system recognizes the operator and the company to which the operator belongs (or customer).

Next, the customer instructs the transfer of the file from the work space to the asset content (in a step j). Then, the designated job file among the job files present in the job space 152 for the job in the work space 151 of the customer in the work space server 150 shown in FIG. 5, is transferred to the asset content server 160 and registered by the asset content server 160 as the asset file of the customer.

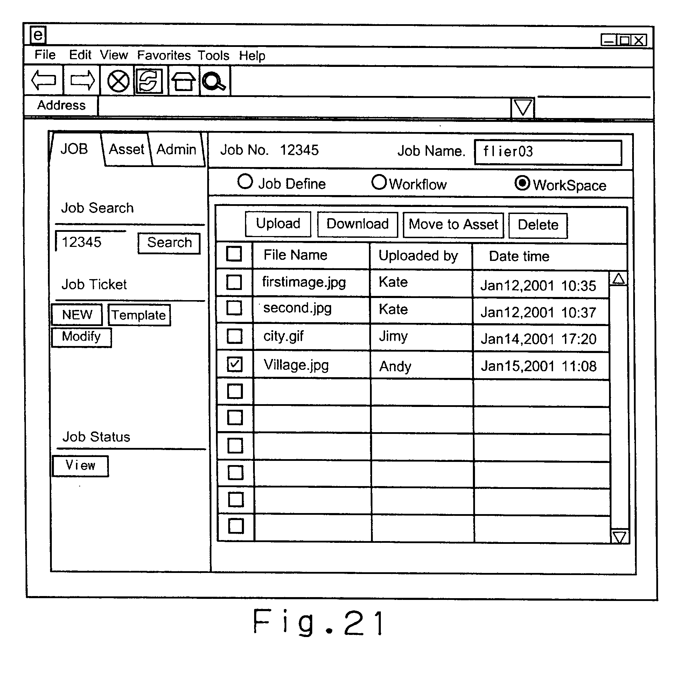

FIG. 21 shows a screen for transferring a file from the work space server to the assent content server.

If a job is extracted by "Job Search" and "Work Space" radio button is selected, then a list of files (job files) in the job space relating to the job in the work space server 150 (see FIG. 5) is displayed as shown in FIG. 21. If designating a job file to be transferred to the asset content server 160 on the list (in FIG. 21, designating "Village.jpg" job file) and selecting "Move to Asset", then the job file is transferred to the asset content server 160 and registered in the asset content server 160 as the asset file of the customer.

In the workflow shown in FIG. 8, asset search is then carried out (in a step k). If the search result is displayed, a keyword is additionally inputted at need (in a step l).

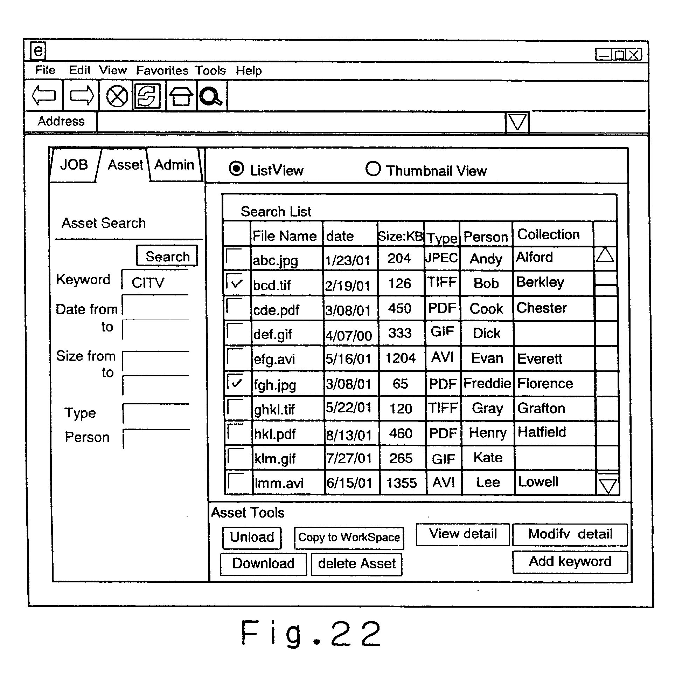

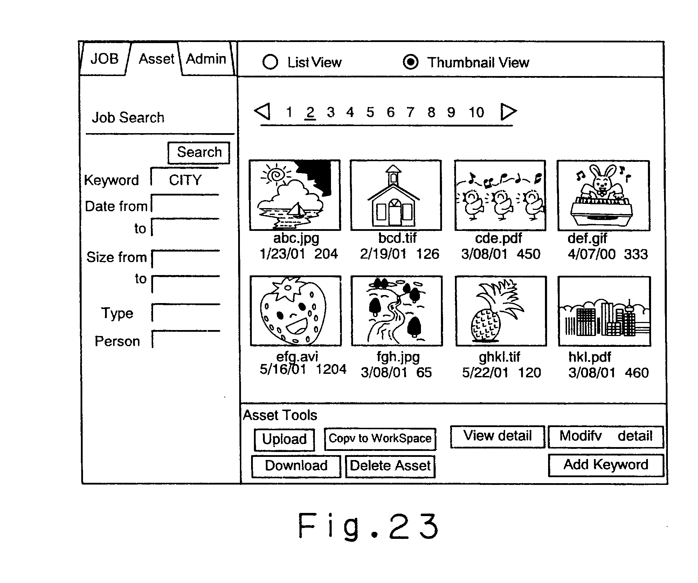

FIGs. 22 and 23 show asset search screens.

"Asset" is selected from among "JOB" , "Asset" and "Admin" appearing on the upper left of the screen, keyword "CITY" is designated and "Search" is selected. Then, a list of asset files to which the keyword "CITY" is added among the asset files of the customer, is displayed.

Here, if "Thumbnail View" radio button is selected out of "List View" and "Thumbnail View" on this list, the screen is changed to "List View" screen shown in FIG. 22 and "Thumbnail View" screen shown in FIG. 23 is displayed. Conversely, if "List View" radio button is selected while "Thumbnail View" screen is being displayed, the screen is returned to "List View" screen shown in FIG. 22.

The asset file search can be conducted by inputting a keyword into "Keyword" box, designating the range of the date (year, month, day) when the file was registered as an asset file into "Data from ... to ..." box, designating the range of file size in "Size from ... to ..." box, designating the data type (tif or jpg) of the asset file in "Type" box, or inputting the name of the operator who registered the asset file into "Person" box.

Further, if one or a plurality of asset files are selected on the display screen of FIG. 22 (two asset file having "File Name" of "bcd.tif" and "fgh.jpg" are selected in FIG. 22) and "Add keyword" of "Asset Tools" is selected, then a keyword input screen, not shown, is displayed. If inputting a keyword on the keyword input screen, the keyword is added to the selected asset files (two asset files of "bcd.tif" and "fgh.jpg" in FIG. 22) (in a step l of FIG. 6). The keyword is used to conduct search based on "Keyword" stated above. The other icons of "Asset Tools" will be described later.

If the asset file stored in the asset content server 160 shown in FIG. 5 is reused for a new job, a customer logs in the system (in a step m of FIG. 8) and the system recognizes the operator and the company to which the operator belongs. Next, an instruction to transfer the file from the asset content server 160 to the work space is issued (in a step n). In response to the instruction, the substantial file is transferred from the asset content server 160 to the work space.

In this operation, if a file to be transmitted to the work space server 150 is designated on the screen of FIG. 22 ("bcd.tif" and "fgh.jpg" are designated in FIG. 22) and "Copy to Work Space" of "Asset Tools" is selected, then a job designating screen, not shown, is displayed and a job is designated on the screen. Then, the file designated on the screen of FIG. 22 ("bcd.tif" and "fgh.jpg" in the example of FIG. 22) is transferred to the work space server 150 shown in FIG. 5 and stored as a job file in the job space 152 relating to the designated job.

Further, the files stored in the asset content server 160 can be not only transferred to and from the work space server 150 but also uploaded from the terminals of the customers and clients and downloaded to the terminals of the customers and the like. If files are uploaded from the terminals of the customers and clients to the asset content server 160, "Upload" of "Asset Tools" is selected on the screen of FIG. 22 or FIG. 23. Then, a screen for selecting the local file on the terminal is displayed as shown in FIG. 19, the file is designated on the screen and "Upload" is selected thereon. The designated file is uploaded to the asset content server 160.

Further, if a file is selected on the screen shown in FIG. 22 or FIG. 23 and "Download" of "Asset Tools" is selected, the designated file is downloaded to a terminal.

Furthermore, if an asset file is designated on the screen shown in FIG. 22 or FIG. 23 and "View detail" is selected, then the content of asset information 162 (see FIG. 5) attached to the designated file is displayed and the detail of the asset file can be known.

Further, "Modify detail" is a button selected when the content of the asset information is modified or rewritten. If an asset file is designated and "Modify detail" is selected, then the content of assent information on the designated asset file is displayed and the content of the asset information can be modified.

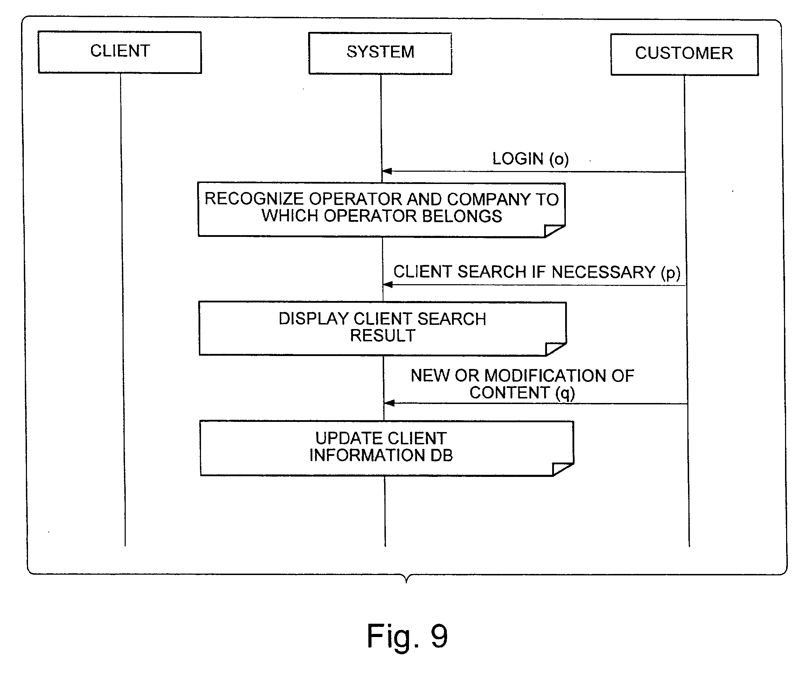

FIG. 9 is a workflow chart for the definition of the customer and client.

Here, the customer logs in the system (in a step o of FIG. 10) and the system recognizes the operator and the company to which the operator belongs.

Next, a client search is conducted (in a step p) and the client search result is displayed. Then, one client is specified and the definition of the client is modified or a new client is defined (in a step q). In accordance with the definition, the system updates the client information database. It is noted that a specific job is not defined but privileges and the like authorized to the client, separately from the specific job, are defined.

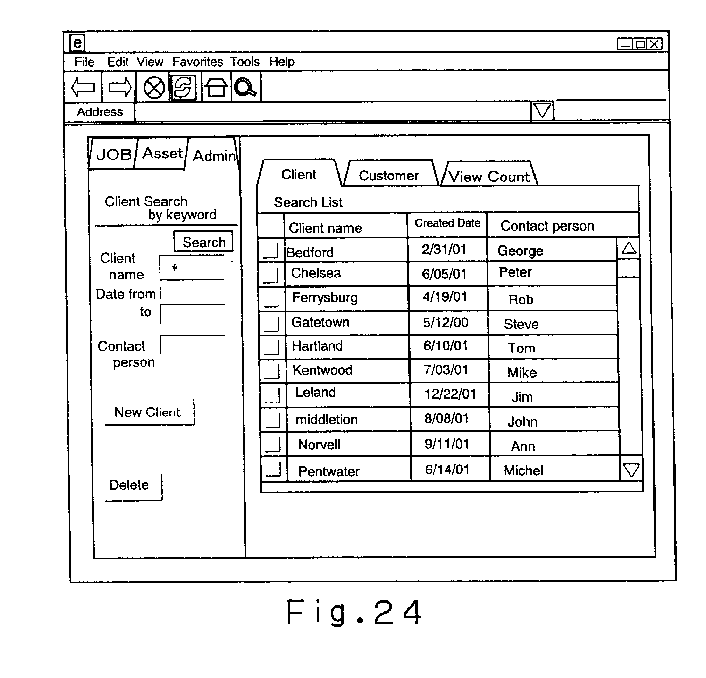

FIG. 24 shows a client list screen.

On this screen, a list of clients authorized to participate in jobs by the customers who access the system as a result of inputting "*" into "Client Name" and conducting "Search", is displayed.

By designating one client among these clients, the client which privileges of function are to be modified is designated.

To search for a client, by inputting the range of date (year, month, day) when the party was registered as a client into "Date from ... to ..." box or inputting the name of the operator into "Contact person" besides inputting the name of the client into "Client Name" box as stated above, a corresponding client is extracted.

"New Contact" is a button selected when a new client is defined. "Delete" is a button for deleting a client from a client list by designating the client and selecting this "Delete".

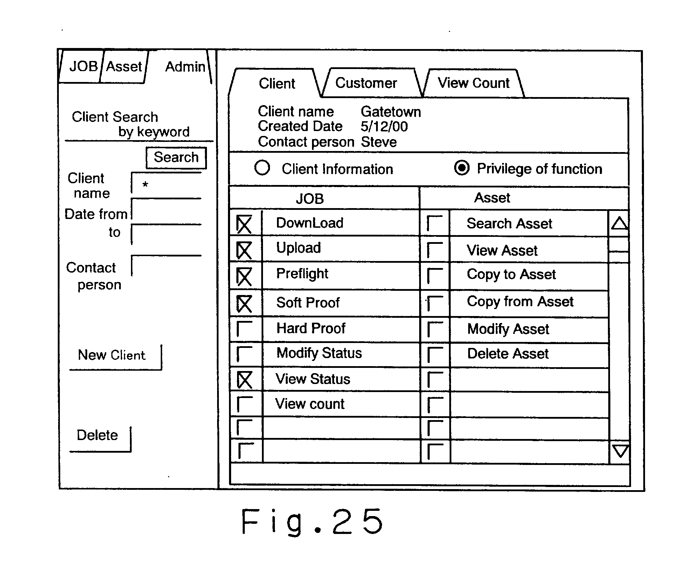

FIG. 25 is a client privilege designating screen.

On the screen shown in FIG. 25, if "Client Information" radio button is selected, a screen (not shown) for referring to or modifying information on the client such as the name and the address of the client and the like is displayed. If "Privilege of function" radio button is selected, a list of items for which privileges can be authorized to the client is displayed and privileges authorized to the client are selected.

In this way, the client is defined.

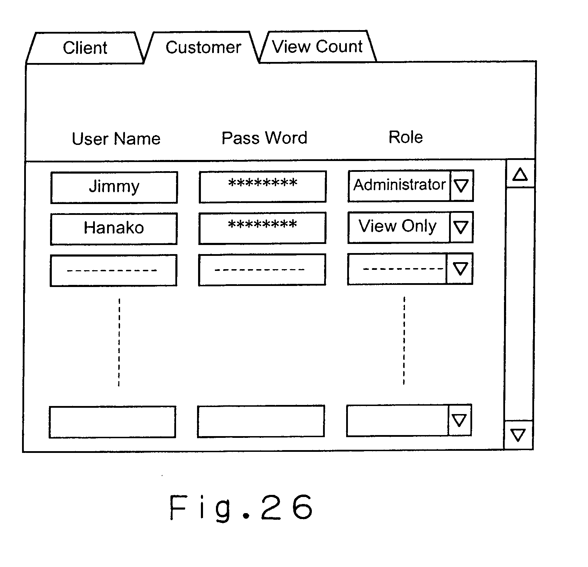

FIG. 26 shows a screen displayed when "Customer" is selected in FIG. 24 or FIG. 25. On this screen, the operators of customers who operate the system and privileges authorized to the operators are defined.

Here, one operator is designated from among the operators registered in advance or a new operator is designated ("User Name"), the password of the operator is inputted ("Pass Word") and the role of the operator (privileges authorized to the operator) is selected from a plurality of preset templates )("Role").

On the client side, the role of the operator of the client is determined in the range of the privileges authorized to the client as in the case of FIG. 26.

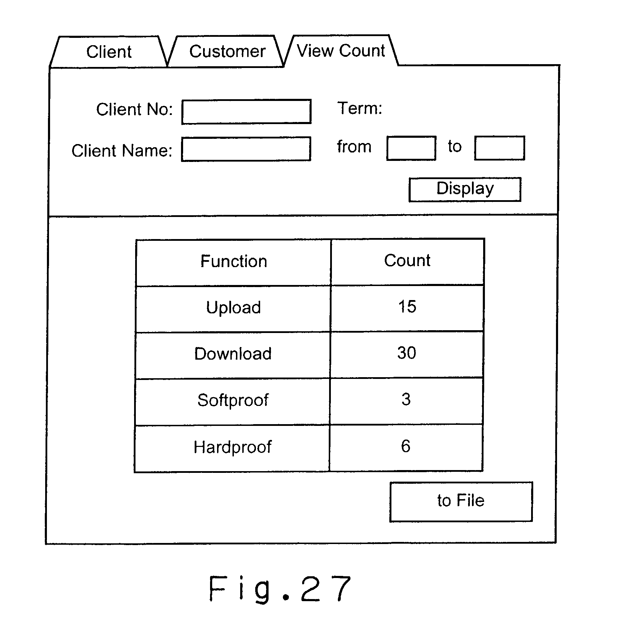

FIG. 27 is a screen displayed when "View Count" is selected in FIG. 24 or FIG. 25.

By inputting a client number into "Client No" box or inputting the name of the client into "Client Name" box, the client is specified. Further, if a term is inputted into "Term from ... to ..." box and "Display" button is depressed, the number of times of preflight and upload ("Upload"), that of download ("Download"), that of soft proof ("Softproof") and that of hardproof ("Hardproof") of the client within the term are displayed.

Here, if "to File" button is depressed, a folder selection screen on the terminal of the customer is displayed and the data displayed on the screen of FIG. 27 is stored, as an XML data file, in a selected folder.

Using "Client No." or "Client Name" box shown in FIG. 27, the client oneself (customer) can be selected. In that case, the number of times of upload and the like of the customer oneself are displayed on the screen.

As described above, in the embodiments of the present invention, the clients are defined by the customer, the jobs and workflows are defined and information is shared among the customers and client while protecting security against the other parties and group work is executed so as to complete the job.

## Claims

1. A printing materials production supporting apparatus comprising:
a definition reception section receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line;
a customer/client management section managing information on said customer and the information on said client;
a progress management section managing a progress status of the job received by said definition reception section for each job; and
a file management section managing a substantial file storing data available as the printing material or data available as a part of the printing material relating to the job received by said definition reception section for each job.

2. The printing materials production supporting apparatus according to claim 1, comprising:
an upload count section counting the number of times of upload of the substantial file by said customer and said client.

3. The printing materials production supporting apparatus according to claim 1, comprising:
a preflight rule download section downloading rules necessary to execute a preflight processing for verifying whether the data stored in the substantial file is appropriate data for printing, to said customer and said client.

4. The printing materials production supporting apparatus according to claim 1, wherein
said definition reception section receives designation of privileges of the client by said customer, and said customer/client management section manages the information on the customer and the information on the client including information on the privileges of the customer; and
the printing materials production supporting apparatus approves access from the client in a range of the privileges authorized to the client.

5. The printing materials production supporting apparatus according to claim 1, wherein
said definition reception section receives designation of an operator operating the terminal and designation of privileges of the operator, and said customer/client management section manages information on the operator including information on the privileges of the operator as well as the information on the customer and the information on the client; and
the printing materials production supporting apparatus approves access from the operator in a range of the privileges authorized to the operator.

6. The printing materials production supporting apparatus according to claim 1, comprising:
an asset management section managing the substantial file storing data available as the printing material or data available as a part of the printing material for each customer; and
a first transfer section transferring the substantial file managed by said file management section to said asset management section in accordance with an instruction.

7. The printing materials production supporting apparatus according to claim 1, comprising:
an asset management section managing the substantial file storing the data available as the printing material or data available as a part of the printing material for each customer; and
a second transfer section transferring the substantial file managed by the asset management section to said file management section in accordance with an instruction with the job being designated.

8. A printing materials production supporting system comprising:
a definition reception section receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line;
a customer/client management section managing information on said customer and the information on said client;
a progress management section managing a progress status of the job received by said definition reception section for each job; and
a file management section managing a substantial file storing data available as the printing material or data available as a part of the printing material relating to the job received by said definition reception section for each job.

9. A printing materials production supporting program executed in a computer and thereby allowing the computer to operate as a printing materials production supporting apparatus for supporting production of printing materials, the program comprising:
a definition reception section receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line;
a customer/client management section managing information on said customer and the information on said client;
a progress management section managing a progress status of the job received by said definition reception section for each job; and
a file management section managing a substantial file storing data available as the printing material or data available as a part of the printing material relating to the job received by said definition reception section for each job.

10. A printing materials production supporting program executed in a computer and thereby allowing the computer to operate as a printing materials production supporting system for supporting production of printing materials, the program comprising:
a definition reception section receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line;
a customer/client management section managing information on said customer and the information on said client;
a progress management section managing a progress status of the job received by said definition reception section for each job; and
a file management section managing a substantial file storing data available as the printing material or data available as a part of the printing material relating to the job received by said definition reception section for each job.

11. A printing materials production supporting method comprising the steps of:
receiving a definition of a job representing one work consisting of a series of steps for producing one printing material, a definition of a work flow representing procedures for executing the job, and input of information on a client executing the job together with a predetermined customer, from a terminal of the predetermined customer among a plurality of terminals connected through a communication line;
managing information on the customer and the information on the client;
managing a progress status of the job received in the step of receiving the definition for each job; and
managing a substantial file storing data available as the printing material or data available as a part of the printing material relating to the job received in the step of receiving the definitions for each job.
